# EUROPEAN PATENT SPECIFICATION

(11) **EP 1 189 727 B1**
(45) Date of publication and mention of the grant of the patent: **06.10.2004**
(21) Application number: 00935774.0
(22) Date of filing: 05.05.2000
(51) Int. Cl.: B23Q 11/02

(54) **DEVICE AND METHOD FOR ENCLOSING THE SPACE AROUND A MACHINING POINT**
VERFAHREN UND VORRICHTUNG ZUR ABDECKUNG DES RAUMS UM EINE BEARBEITUNGSSTELLE
PROCEDE ET DISPOSITIF POUR COUVRIR UN ESPACE AUTOUR D'UN POINT D'USINAGE

(30) Priority: 28.05.1999 SE 9901945
(43) Date of publication of application: 27.03.2002
(73) Proprietor: VOLVO CAR CORPORATION, 405 08 Göteborg (SE)
(72) Inventor: LÖF, Klas-Arne, S-541 48 Skövde (SE); ANDERSSON, Matz, S-541 33 Skövde (SE)
(74) Representative: Willquist, Bo
(86) International application number: PCT/SE2000/000889
(87) International publication number: WO 2000/073017

(56) References cited:
- DE-A- 4 439 114
- DE-A1- 3 734 127
- DE-A1- 4 223 480
- GB-A- 2 285 125
- US-A- 4 037 982
- US-A- 4 530 627

## Description

The present invention relates to a method in the chip-removing machining of a work-piece by means of a tool rotating with an arbor arranged in a headstock, which tool is displaceable both in an axial direction towards and away from the work-piece and in a plane substantially perpendicular to the arbor, according to the pre-characterising part of claim 1, and to a device in a machine for the chip-removing machining of a work-piece by means of a tool capable of rotating with an arbor arranged in a headstock. which tool is displaceable both in an axial direction towards and away from the work-piece and in a plane substantially perpendicular to the arbor, according to the pre-characterising part of claim 5.

In existing automatic chip-removing machining very large quantities of chips are produced. Even if the actual machining does nor require the supply of cutting fluid for cooling purposes and in order to improve the chip removal. large quantities of cutting fluid are used to carry the chips away.

The cutting fluid has a low surface tension, which means that it easily gets into seals and bearings etc.. and is aggressive towards electrical and mechanical components. During machining chips and cutting fluid are thrown around in an uncontrolled manner, which may upset the machine and reduce its availability. When machining is in progress it is generally impossible to get close to the machine owing to the dispersion of cutting fluid and chips.

Attempts have certainly been made to reduce the dispersion of chips and cutting fluids by arranging a tunnel around the part that is to be machined, clamping devices for the latter and the machining tool. This has admittedly been successful in containing the chips and cutting fluid within a more restricted area, but such a tunnel does not prevent exposure of bearing heels, conveying devices for moving the part, indexing elements, sensors etc.

The chips may interfere with sensors for controlling the clamping and machining, which may lead to false alarms, and can get jammed when clamping the part, which may lead to incorrect machining or production stoppages etc.

DE-44 39 114 A I discloses an enclosure for use in chip-removing machining of a workpiece according to the preamble of claim 5. The enclosure has a fixed volume, and in one of its walls, there is an opening through which a tool may be introduced. A plate is arranged around the tool, such that the plate is displaceable against and in the plane of the wall having the opening, thereby maintaining a sealed enclosure. The tool is displaceable relative to the plate, in a direction perpendicular to the plate, whereby the headstock carrying the tool is sealed against the plate.

The object of the present invention is to produce a method and a device of the above-mentioned type by means of which the consumption of cutting fluid can be reduced, bringing economic and environmental improvements together with fewer and shorter machine stoppages, which gives greater availability and improved economy and more available production time. The object has been achieved by a method and a device having the characteristics specified in claim 1 and claim 5 respectively.

Preferred embodiments of the method and the device moreover have any or some of the characteristics specified in the respective sub-ordinate claims.

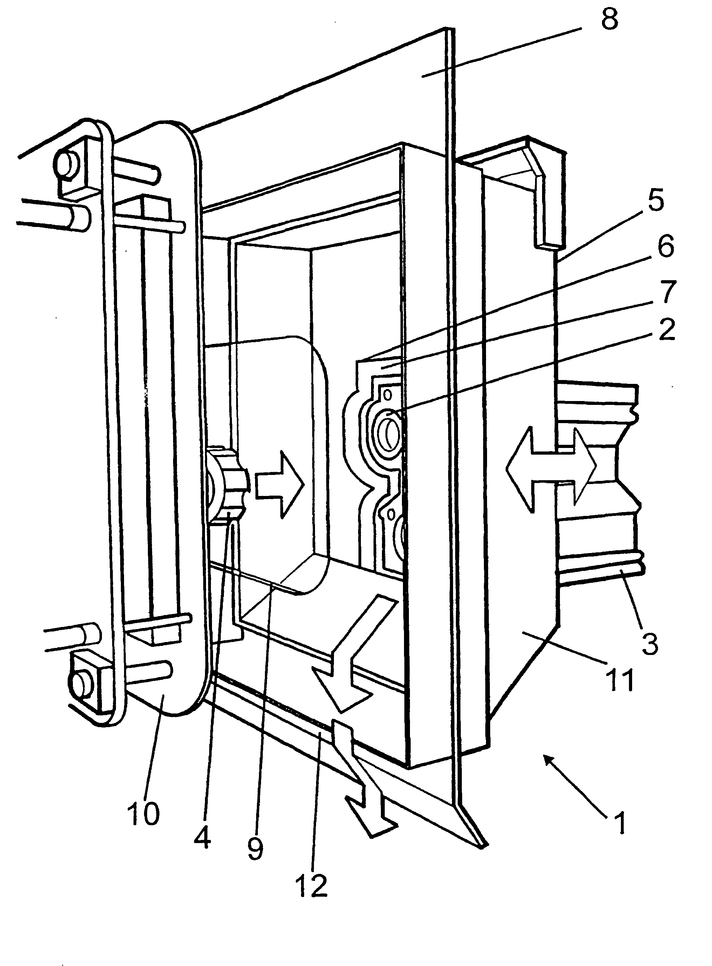

The invention will be explained in more detail below with reference to the drawing attached, in which 1 generally denotes an enclosure, designed to be arranged around a machining point 2 in a machine for chip-removing machining of a work-piece 3, here represented as an engine block.

A cutting tool 4 is rotatable with an arbor arranged in a headstock and is displaceable both in an axial direction. that is to say in the axial direction of the arbor. towards and away from the work-piece 3. and in a plane perpendicular to the arbor for performing one or more machining operations on the work-piece 3.

The enclosure 1 has a first wall 5 facing the work-piece 3 with a first opening 6, which is designed to bear tightly against the work-piece 3 around the part of the work-piece 3 that is to be machined, that is to say the machining point 2. As shown, the first wall 5 may have an opening 6, for example, the outline of which is congruent with but somewhat larger than the surface that is to be machined. It may also have an opening 6 somewhat larger than the outline of the work-piece 3 and a seal 7, designed to allow the work-piece 3 to be at least partially introduced into the space in a machining position, while the seal 7 forms a seal against the work-piece 3.

A second wall 8 (shown transparent in the figure) opposite the first wall 5 and substantially perpendicular to the arbor has a second opening 9, which allows the tool 4 to be introduced into the enclosure 1 in order to carry out the machining. The second wall 8 is designed, during displacement of the headstock in the direction of the arbor for machining purposes, to bear tightly against a plane plate 10, arranged axially behind the machining tool 4 and around the headstock, substantially perpendicular to the arbor, so that a substantially enclosed space is formed in the area around the tool 4 and the machining point 2. The enclosed space is formed by the said two walls 5, 8 and a third circular wall 11, which joins the peripheries of the first and second walls. The plate 10 is arranged so that when the tool 4 is applied against the work-piece 3 the plate can move against a return force in the direction of the arbor whilst continuing to bear tightly against the second wall 8 of the enclosure. The plate 10 is also displaceable with the tool 4 in the plane perpendicular to the arbor whilst bearing tightly around the second opening 9 in the enclosure. This is due to the fact that the plate 10 is designed so much larger than the second opening 9 that it completely covers the second opening 9 and bears around its periphery during the maximum displacement of the tool 4 in the plane perpendicular to the arbor permitted by the machine tool during machining.

Alternatively, the said third wall 11 may be formed by a telescopic cover or a flexible bellows, which of itself or with the aid of spring devices can generate the return force that is required to maintain a tight bearing contact between the second wall and the plate. In this way it is also possible to make the second opening 9 of the enclosure I including the wall 8 displaceable in relation to the work-piece 3 against a return force in the direction of the arbor (not shown). Because the wall 8 of the enclosure I containing the second opening 9 is formed in a part of the enclosure 1, which whilst maintaining the seal can move telescopically around a part of the enclosure 1 that includes the first opening 9, it is possible to maintain not only the sealing contact against the plate 10 but also an enclosed space around the machining point 2 when the tool 4 is applied to the work-piece 3.

The enclosure 1 furthermore has an outlet opening 12 at the bottom, through which chips that are removed can be evacuated from the enclosure I by means of cutting fluid delivered to the machining point. Cutting fluid can be delivered to the machining point 2 in many different ways, for example by means of a line opening into the enclosed space, which line can be introduced into the enclosure I through a separate opening in the enclosure 1 or through the first opening 6 via the work-piece 3 or through the second opening 9 in connection with the machine tool 4.

A negative pressure source, for example a suction fan (not shown), to further assist the evacuation of chips and cutting fluid can be arranged in connection with the outlet opening 12.

## Claims

1. Method in the chip-removing machining of a work-piece (3) by means of a tool (4) rotating with an arbor arranged in a headstock, which tool is displaceable both in an axial direction towards and away from the work-piece (3) and in a plane substantially perpendicular to the arbor, an enclosure (1) being arranged around a machining point (2) on the work-piece (3), a first opening (6) in the enclosure (1) being made to bear tightly against the work-piece (3) around the machining point (2) and a second opening (9). made in a wall (8) of the enclosure (1) substantially perpendicular to the arbor, during machining, to bear tightly against a plane plate (10) arranged behind the tool (4) and around the headstock, substantially perpendicular to the arbor, so that during machining a substantially enclosed space is created in the area around the tool (4) and the machining point (2), whereby when the tool (4) is applied to the work-piece (3) the plate (10) is displaced axially together with the tool (4) against a return force whilst bearing tightly around the second opening (9), **characterised in that** when the tool (4) is applied to the work-piece (3) the wall (8) of the enclosure (1) containing the opening (9) is displaced axially in relation to the work-piece (3) against a return force whilst not only bearing tightly against the plate (10) but also maintaining an enclosed space around the machining point (2).

2. Method according to claim 1, **characterised in that** the tool (4) can be moved in the plane of the plate (10) within the area enclosed by the opening (9) whilst bearing tightly against the wall (8).

3. Method according to claim 1 or 2, **characterised in that** cutting fluid is delivered to the machining point (2) and the enclosure (1) furthermore has an outlet opening (12) through which chips that are removed are evacuated from the enclosure (1) by means of the cutting fluid delivered to the machining point (2).

4. Method according to any of the preceding claims, **characterised in that** a negative pressure source, for example a suction fan, is arranged in connection with the outlet opening (12).

5. An enclosing device for use in a machine for chip-removing machining of a work-piece (3) by means of a tool (4) capable of rotating with an arbor arranged in a headstock, which tool is displaceable both in an axial direction towards and away from the work-piece (3) and in a plane substantially perpendicular to the arbor,
said enclosing device comprising an enclosure (1) which is sized and adapted to be arranged around a machining point (2) on the work-piece (3),
the enclosure (1) having a first opening (6) designed to bear tightly against the work-piece (3) around the machining point (2), and
a second opening (9) made in a wall (8) of the enclosure (1) and sized and adapted for being arranged substantially perpendicular to the arbor, and
a plane plate (10) which is sized and adapted for being arranged behind the tool (4) and around the headstock, substantially perpendicular to the arbor,
whereby said second opening (9) is designed, during machining, to bear tightly against said plane plate (10),
so that during machining there is a substantially enclosed space in the area around the tool (4) and the machining point (2),
whereby the plate (10) is designed for being arranged in an axially displaceable manner relative to the tool (4) against a return force whilst bearing tightly round the second opening (9) of the enclosure (1),
**characterized in that**
the wall (8) of the enclosure containing the opening (9) is designed for being axially displaceable relative to the work-piece (3) against a return force whilst not only bearing tightly against the plate (10) but also maintaining an enclosed space around the machining point (2).

6. The enclosing device according to claim 5, **characterized in that** said second opening (9) is designed such that the tool (4), whilst bearing tightly against the wall (8), is moveable in the plane of the plate (10) within the area defined by the second opening (9).

7. The enclosing device according to claim 5 or 6, **characterized in that** the first opening (6) has an outline that is congruent with but somewhat larger than the outline of the work-piece (3) and a seal (7), designed to allow the work-piece (3) to be introduced, at least partially, into the space into a machining position.

8. The enclosing device according to any one of claims 5-7, **characterized in that** the device comprises means of delivering cutting fluid to the machining point (2) and the enclosure (1) has an outlet opening (12) through which chips that are removed can be evacuated from the enclosure (1) by means of the cutting fluid delivered.

9. The enclosing device according to claim 8, **characterized in that** the outlet opening (12) is connected to a negative pressure source, for example a suction fan.

10. The enclosing device according to any one of claims 5-9, **characterized in that** a line arranged as a means of delivering cutting fluid opens into the enclosed space.

11. A machine for chip-removing machining of a work piece by means of a tool (4) capable of rotating with an arbor arranged in a headstock, which tool is displaceable both in an axial direction towards and away from the work-piece (3) and in a plane substantially perpendicular to the arbor, **characterised in that** the machine comprises the enclosing device according to any one of claims 5-10.

## Patentansprüche

1. Verfahren beim spanabhebenden Bearbeiten eines Werkstücks (3) mittels eines Werkzeugs (4), das mit einem Aufnahmedorn, der in einem Spindelstock angeordnet ist, dreht, wobei das Werkzeug sowohl in einer axialen Richtung zu und weg von dem Werkzeug (3) und in einer im Wesentlichen senkrecht zu dem Aufnahmedorn liegenden Ebene verschiebbar ist, wobei eine Einhäusung (1) um eine an dem Werkstück (3) befindliche Bearbeitungsstelle (2) angeordnet ist, wobei eine erste Öffnung (6) in der Einhäusung (1) zum engen Anliegen am Werkstück (3) um die Bearbeitungsstelle (2) herum ausgebildet ist und eine zweite Öffnung (9) in einer im Wesentlichen senkrecht zu dem Aufnahmedorn liegenden Wand (8) der Einhäusung (1) derart ausgebildet ist, dass sie während des Bearbeitens an einer ebenen Platte (10), die hinter dem Werkzeug (4) und um den Spindelstock herum, im Wesentlichen senkrecht zu dem Aufnahmedorn angeordnet ist, eng anliegt, so dass während des Bearbeitens ein im Wesentlichen geschlossener Raum in dem Bereich um das Werkzeug (4) und um die Bearbeitungsstelle (2) geschaffen wird, wobei, wenn das Werkzeug (4) gegen das Werkstück (3) fährt, die Platte (10) zusammen mit dem Werkzeug (4) gegen eine Rückstellkraft axial verschoben wird, während sie um die zweite Öffnung (9) herum eng anliegt,
**dadurch gekennzeichnet, dass** wenn das Werkzeug (4) gegen das Werkstück (3) fährt, die Wand (8) der Einhäusung (1), welche die Öffnung (9) enthält, in Relation zu dem Werkstück (3) gegen eine Rückstellkraft axial verschoben wird, während sie nicht nur an der Platte (10) eng anliegt, sondern auch einen umschlossenen Raum um die Bearbeitungsstelle (2) aufrechterhält.

2. Verfahren nach Anspruch 1, **dadurch gekennzeichnet, dass** das Werkzeug (4) in der Ebene der Platte (10) innerhalb des durch die Öffnung (9) umschlossenen Bereichs bewegt werden kann, während sie eng an der Wand (8) anliegt.

3. Verfahren nach Anspruch 1 oder 2, **dadurch gekennzeichnet, dass** Schneidflüssigkeit zu der Bearbeitungsstelle (2) zugeführt wird, und die Einhäusung ( 1 ) darüber hinaus eine Auslassöffnung (12) aufweist, durch welche Späne, die abgehoben werden, mittels der Schneidflüssigkeit, die zu der Bearbeitungsstelle (2) zugeführt wurde, aus der Einhäusung (1) abgeführt werden.

4. Verfahren nach irgendeinem der voranstehenden Ansprüche, **dadurch gekennzeichnet, dass** eine Unterdruckquelle, beispielsweise ein Ansauggebläse, im Anschluss an die Auslassöffnung (12) angeordnet ist.

5. Kapselungsvorrichtung zur Verwendung in einer Maschine zur spanabhebenden Bearbeitung eines Werkstücks (3) mittels eines Werkzeugs (4), das mit einem in einem Spindelstock angeordneten Aufnahmedorn drehbar ist, wobei das Werkzeug sowohl in einer axialen Richtung zu dem Werkstück (3) hin und von diesem weg und in einer im Wesentlichen senkrechten Ebene zu dem Aufnahmedorn verschiebbar ist,
wobei die Kapselungsvorrichtung eine Einhäusung ( 1 ) umfasst, die so groß und derart ausgebildet ist, dass sie um eine Bearbeitungsstelle (2) am Werkstück (3) herum angeordnet werden kann,
wobei die Einhäusung (1) eine erste Öffnung (6) besitzt, die dazu ausgestaltet ist, um die Bearbeitungsstelle (2) herum eng am Werkstück (3) anzuliegen, und
eine zweite Öffnung (9), die in einer Wand (8) der Einhäusung ( 1 ) vorhanden ist und so groß und derart ausgebildet ist, dass sie im Wesentlichen senkrecht zu dem Aufnahmedorn angeordnet werden kann, und
eine ebene Platte (10), die so groß und derart ausgebildet ist, dass sie hinter dem Werkzeug (4) und um den Spindelstock herum, im Wesentlichen senkrecht zu dem Aufnahmedorn angeordnet werden kann,
wobei die zweite Öffnung (9) dazu ausgestaltet ist, während des Bearbeitens eng an der ebene Platte (10) anzuliegen,
so dass während des Bearbeitens ein im Wesentlichen geschlossener Raum in dem Bereich um das Werkzeug (4) und die Bearbeitungsstelle (2) herum vorhanden ist,
wobei die Platte (10) derart ausgestaltet ist, dass sie relativ zu dem Werkzeug (4) gegen eine Rückstellkraft axial verschiebbar angeordnet werden kann, während sie um die zweite Öffnung (9) der Einhäusung (1) herum eng anliegt,
**dadurch gekennzeichnet, dass**
die Wand (8) der Einhäusung, welche die Öffnung (9) enthält, derart ausgestaltet ist, dass sie relativ zu dem Werkstück (3) gegen eine Rückstellkraft axial verschiebbar ist, während sie nicht nur eng an der Platte (10) anliegt, sondern auch einen umschlossenen Raum um die Bearbeitungsstelle (2) herum aufrechterhält.

6. Kapselungsvorrichtung nach Anspruch 5, **dadurch gekennzeichnet, dass** die zweite Öffnung (9) dergestalt ausgestaltet ist, dass, während des engen Anliegens an der Wand (8), das Werkzeug (4) in der Ebene der Platte (10) innerhalb des durch die zweite Öffnung (9) definierten Bereichs bewegbar ist.

7. Kapselungsvorrichtung nach Anspruch 5 oder 6, **dadurch gekennzeichnet, dass** die erste Öffnung (6) einen Umriss besitzt, der mit dem Umriss des Werkstücks (3) übereinstimmt, jedoch etwas größer ist, und eine Dichtung (7), die derart ausgestaltet ist, dass es ermöglicht wird, dass das Werkstück (3) zumindest teilweise in den Raum in eine Bearbeitungsposition eingeführt werden kann.

8. Kapselungsvorrichtung nach einem der Ansprüche 5-7, **dadurch gekennzeichnet, dass** die Vorrichtung Mittel zum Zuführen von Schneidflüssigkeit zu der Bearbeitungsstelle (2) umfasst und die Einhäusung ( 1 ) eine Auslassöffnung (12) besitzt, durch die abgehobenen Späne mittels der zugeführten Schneidflüssigkeit aus der Einhäusung (1) herausgeführt werden können.

9. Kapselungsvorrichtung nach Anspruch 8, **dadurch gekennzeichnet, dass** die Auslassöffnung (12) mit einer Unterdruckquelle, beispielsweise ein Sauggebläse, verbunden ist.

10. Kapselungsvorrichtung nach einem der Ansprüche 5-9, **dadurch gekennzeichnet, dass** eine Leitung, die als Mittel zum Zuführen von Schneidflüssigkeit angeordnet ist, in den gekapselten Raum mündet.

11. Maschine zum spanabhebenden Bearbeiten eines Werkstücks mittels eines Werkzeugs (4), das mit einem in einem Spindelstock angeordneten Aufnahmedorn drehbar ist, wobei das Werkzeug sowohl in axialer Richtung zum Werkstück (3) hin und von diesem weg als auch in einer zu dem Aufnahmedorn im Wesentlichen senkrechten Ebene bewegbar ist,
**dadurch gekennzeichnet, dass** die Maschine die Kapselungsvorrichtung nach einem der Ansprüche 5-10 umfasst.

## Revendications

1. Procédé utilisé dans l'usinage par enlèvement de copeaux d'une pièce de travail (3) au moyen d'un outil (4) tournant avec un arbre disposé dans une poupée, lequel outil est déplaçable à la fois dans la direction axiale vers et en éloignement de la pièce de travail (3) et dans un plan pour l'essentiel perpendiculaire à l'arbre, une enceinte (1) étant disposée autour d'un point d'usinage (2) sur la pièce de travail (3), une première ouverture (6) dans l'enceinte (1) étant aménagée pour appuyer de façon serrée contre la pièce de travail (3) autour du point d'usinage (2) et une seconde ouverture (9) étant ménagée dans une paroi (8) de l'enceinte (1) pour l'essentiel perpendiculaire à l'arbre, pendant l'usinage, pour appuyer de façon serrée contre une plaque plane (10) disposée derrière l'outil (4) et autour de la poupée, pour l'essentiel perpendiculaire à l'arbre, de sorte que pendant l'usinage un espace pour l'essentiel clos est créé dans la zone autour de l'outil (4) et du point d'usinage (2) ce par quoi quand l'outil (4) est appliqué à la pièce de travail (3) la plaque (10) est déplacée axialement avec l'outil (4) contre une force de retour tout en appuyant de façon serrée autour de la seconde ouverture (9) **caractérisé en ce que** lorsque l'outil (4) est appliqué à la pièce de travail (3) la paroi (8) de l'enceinte (1) contenant l'ouverture (9) est déplacée axialement par rapport à la pièce de travail (3) contre une force de retour tout en non seulement appuyant de façon serrée contre la plaque (10) mais aussi en maintenant un espace fermé autour du point d'usinage (2).

2. Procédé selon la revendication 1, **caractérisé en ce que** l'outil (4) peut être déplacé dans le plan de la plaque (10) à l'intérieur de la zone entourée par l'ouverture (9) pendant qu'il appuie de façon serrée contre la paroi (8).

3. Procédé selon la revendication 1 ou 2, **caractérisé en ce que** un fluide de coupe est amené au point d'usinage (2) et que l'enceinte (1) possède en outre une ouverture de sortie (12) au travers de laquelle des copeaux qui sont enlevés sont évacués de l'enceinte (1) au moyen du fluide de coupe amené au point d'usinage (2).

4. Procédé selon l'une quelconque des revendications précédentes, **caractérisé en ce qu'**une source de pression négative, par exemple un ventilateur d'aspiration, est disposé en connection avec l'ouverture de sortie (12).

5. Dispositif d'enceinte pour être utilisé dans une machine pour l'usinage par enlèvement de copeaux d'une pièce de travail (3) au moyen d'un outil (4) capable de tourner avec un arbre disposé dans une poupée, lequel outil est déplaçable à la fois dans une direction axiale vers et en éloignement par rapport à la pièce de travail (3) et dans un plan pour l'essentiel perpendiculaire à l'arbre,
ledit dispositif d'enceinte comprenant une enceinte (1) qui est dimensionnée et adaptée pour être disposée autour d'un point d'usinage (2) sur la pièce de travail (3),
l'enceinte (1) ayant une première ouverture (6) conçue pour appuyer de façon serrée contre la pièce de travail (3) autour du point d'usinage (2) et
une seconde ouverture (9) ménagée dans une paroi (8) de l'enceinte (1) et dimensionnée et adaptée pour être disposée de façon pour l'essentiel perpendiculaire à l'arbre, et
une plaque plane (10) qui est dimensionnée et adaptée pour être disposée derrière l'outil (4) et autour de la poupée, pour l'essentiel perpendiculaire à l'arbre,
ce par quoi ladite seconde ouverture (9) est conçue, pendant l'usinage, pour appuyer de façon serrée contre ladite plaque plane (10),
de façon que pendant l'usinage il y ait un espace pour l'essentiel enclos dans la zone autour de l'outil (4) et du point d'usinage (2),
ce par quoi la plaque (10) est conçue pour être disposée de manière déplaçable axialement par rapport à l'outil (4) contre une force de retour tout en s'appuyant de façon serrée autour de la seconde ouverture (9) de l'enceinte (1),
**caractérisé en ce que**
la paroi (8) de l'enceinte contenant l'ouverture (9) est conçue pour être axialement déplaçable par rapport à la pièce de travail (3) contre une force de retour tout en non seulement appuyant de façon sérrée contre la plaque (10) mais aussi maintenant un espace clos autour du point d'usinage (2).

6. Dispositif d'enceinte selon la revendication 5, **caractérisé en ce que** ladite seconde ouverture (9) est conçue de telle façon que l'outil (4), tout en s'appuyant de façon serrée contre la paroi (8), est déplaçable dans le plan de la plaque (10) dans la zone définie par la seconde ouverture (9).

7. Dispositif d'enceinte selon la revendication 5 ou 6, **caractérisé en ce que** la première ouverture (6) a un profil qui est congruent avec mais un peu plus large que le profil de la pièce de travail (3) et un joint (7), conçu pour permettre à la pièce de travail (3) d'être introduite, au moins partiellement, dans l'espace dans une position d'usinage.

8. Dispositif d'enceinte selon l'une des revendications 5 - 7, **caractérisé en ce que** le dispositif comprend des moyens pour délivrer un fluide de coupe au point d'usinage (2) et l'enceinte (1) dispose d'une ouverture de sortie (12) au travers de laquelle des copeaux qui sont retirés peuvent être évacués de l'enceinte (1) au moyen du fluide de coupe délivré.

9. Dispositif selon la revendication 8, **caractérisé en ce que** l'ouverture de sortie (12) est connectée à une source de pression négative, par exemple un ventilateur d'aspiration.

10. Dispositif d'enceinte selon l'une des revendications 5 - 9, **caractérisé en ce qu'**une canalisation disposée comme moyen de délivrer un fluide de coupe s'ouvre dans l'espace clos.

11. Machine pour l'usinage par enlèvement de copeaux d'une pièce de travail au moyen d'un outil (4) capable de tourner avec un arbre disposé dans une poupée, lequel outil est déplaçable à la fois dans une direction axiale vers et en éloignement par rapport à une pièce de travail (3) et dans un plan pour l'essentiel perpendiculaire à l'arbre, **caractérisée en ce que** la machine comprend le dispositif d'enceinte selon l'une des revendications 5 - 10.
